Europäisches Patentamt

(19) European Patent Office

Office européen des brevets

(11) Publication number : **0 445 994 A2**

(12) # EUROPEAN PATENT APPLICATION

(21) Application number : **91301746.3**

(22) Date of filing : **01.03.91**

(51) Int. Cl.⁵ : **G02C 7/06, G02C 7/04**

(30) Priority : **08.03.90 US 490939**

(43) Date of publication of application :
**11.09.91 Bulletin 91/37**

(84) Designated Contracting States :
**DE GB**

(71) Applicant : **Breger, Joseph Lawrence
511, Ravine Drive
Highland Park, Illinois 60035 (US)**

(72) Inventor : **Breger, Joseph Lawrence
511, Ravine Drive
Highland Park, Illinois 60035 (US)**

(74) Representative : **Bayliss, Geoffrey Cyril et al
BOULT, WADE & TENNANT 27 Furnival Street
London EC4A 1PQ (GB)**

(54) Multifocal simultaneous vision lenses.

(57) The disclosure relates to a multifocal optical correction lens or lens product (10) for focusing objects at two or more distances, such as spectacle lenses, contact lenses, or contact lens buttons has a plurality of optical correction regions (12, 14, 16) for imaging objects at different distances or ranges of distances. At least two such regions are provided with at least one of the regions (12, 14, 16) being repeated in that portion of the lens overlying the wearer's pupil.

FIG. 2

# MULTIFOCAL SIMULTANEOUS VISION LENSES

## BACKGROUND OF THE INVENTION

The present invention pertains to contact lenses, and contact lens products such as contact lens buttons, as well as lens products such as intraocular implant lenses, and eyeglass lenses. More particularly, the present invention applies to multifocal lenses (i.e. lenses focusing objects at different distances) and lens products for simultaneously imaging objects in a wearer's eye.

Many types of vision problems are being corrected with eyeglasses having corrective lenses spaced from a wearer's eyes, and specialized fitting practices are usually not required for a vast majority of patients. However, in contrast, contact lenses in popular use today are limited in application to a smaller fraction of vision deficiencies, those requiring simpler lens designs and less complicated fitting practices. The chair-time required to fit more complicated lens designs reduces the attractiveness of using contact lenses for such applications. One growing field of interest, which will be considered here, is that of contact lenses used in correcting the vision of presbyopic patients and patients suffering from pathological conditions.

Bifocal contact lenses have been used to successfully provide correction for near and far vision distances. The chair-time required to fit a pair of bifocal contact lenses to a patient is not unusual, and the process is not unusually difficult. However, the fitting of presbyopic contact lenses has become a specialized field, requiring special fitting techniques and highly developed skills not required in other type of contact lens practice. Despite various improvements, a reduction in the chair-time required for fitting contact lenses to presbyopic patients is still being sought to make the practice available to a greater number of patients. Similar concerns are also raised with respect to patients suffering from a variety of vision-related pathologies.

A designer of contact lenses has many variables of contact lens design which can be combined to produce a wide variety of corrective lenses. For example, a contact lens can be fitted so as to remain centered on a patients cornea or pupil (a so called central fit), or the contact lens can be deliberately positioned off-center with respect to the wearer's eye. Some fitting practices recognize that a contact lens is rarely stable in a persons eye and accordingly shifts its position relative to the pupil. A so-called alternating vision fitting practice relies on a shift in the wearer's eye to shift the near and distant portion of the lens with respect to the wearer's pupil. On the other hand, fitting practices for contact lenses rely on a relatively constant positioning of the contact lens about the wearer's eye, with optical correction portions for both nearby and distant objects being simultaneously processed by the user. This latter type of fitting practice is frequently referred to as a "simultaneous vision" fit. Included among other variables available to a contact lens designer are the relative sizing of near and distant portions of the lens, and placing either a near or a distant portion at the prominent location on the contact lens, usually at the center thereof. Before the advent of the present invention, considerable skill and experience has been required to provide a successful vision correction over a wide number of presbyopic patients. United States Patent No. 3,726,587 discloses a truncated lens having a prism ballast, the lens being provided with an offset bifocal segment for viewing near objects. The lens of this patent is used to correct for astigmatism, and is limited to patients in which the near and distant correction portions of the lens are closely related (i.e., within 3X), so that optical "jump" and fuzziness are avoided.

One factor affecting the popularity of a lens fitting practice is the amount of chair time required to ensure a patient is comfortable with the new prescription. This factor is especially important for presbyopic patients, where a precise alignment must maintained between the two focal areas of the lens and the patient's pupil, despite a wide range of movement of the patient's eyes. One approach to providing a precise fitting is to fit the contact lenses with a "close fit" closely conforming the curvature of the lens to the curvature of the patient's eye. If the curvature of the lens is increased beyond this point, stability is increased at the expense of patient comfort, and recent studies have indicated problems of inadequate circulation and cleansing of tears associated with tighter-fitting lenses.

Commonly assigned U.S. Patent No. 4,869,587 provided significant improvements in the average chair-time required to fit patient with a bifocal contact lens. The patent also provided a three-element trifocal lens having optical correction portions for near, distant, and intermediate-positioned objects. A natural preference for distant objects when simultaneously processing images of both near and distant objects was noted and the patent provided a range of lens areas for optimum results. The contact lenses mentioned in this patent and the economically pre-manufactured to provide an inventory or "lens set" so that a patients demand for a particular contact lens prescription can be rapidly filled. However, it is expensive for a contact lens manufacturer to provide a large number of practitioners with extensive lens sets. Accordingly, some practitioners may find the cost of a rather complete lens set to be prohibitive or unattractive. Practitioners desiring to reduce inventory overhead may opt for a lens set of reduced size, excluding those lenses needed to correct the vision of patients with more unusual fitting problems, such as non-average pupil sizes. As a result, such wearers might expect to pay a higher than average cost for a contact lens, and may experience extended delays in obtaining the contact lenses needed.

As used herein the term "multifocal" refers to vision correcting apparatus such as completed lenses of various types, and incomplete lenses such as contact lens buttons and the like apparatus, used for vision correction which images objects at different distances, and the term specifically contemplates bifocal and trifocal devices as well as apsherical apparatus which images objects over a range of distances.

It is an object of the present invention to provide a multifocal contact lens which can be quickly and economically produced.

Another object of the present invention is to provide a multifocal contact lens which requires less chair time, even for presbyopic patients or patients suffering from a number of pathological conditions and which minimally impacts the fitting practices of a practitioner when fitting a lens to a particular patient.

Another object according to the present invention is to provide a multifocal contact lens of the above-described type which can economically accommodate a wide range of wearers, including wearers having unusual requirements, such as non-average pupil sizes and unusual eyelid positions.

A further object according to the present invention is to provide simultaneous vision lenses and lens products, such as contact lens buttons, which eliminate the need for practitioners to have highly developed skills or unusual experience, while eliminating the need for special fitting techniques. Even lenses that were recently popular have now become quite unusual and out of the ordinary. For example, since the introduction of soft lenses, optometric colleges have eliminated hard lens fitting from their curriculum, and medical doctors have never had hard lens fitting in their curriculum. The fitting of hard lenses is therefore becoming a specialty requiring unusual skill and expertise. It would be desirable to reduce, if not eliminate the expertise required.

Yet another object according to the present invention is to eliminate annoyance to patients by requiring them to raise or lower their heads or to displace a lens to a particular position in order to focus through a particular optical region.

These and other objects of the present invention, which will become apparent from studying the appended description and drawings, are provided in a first embodiment wherein a multifocal contact lens is comprised of a multifocal vision correcting lens with first and second optic regions for imaging objects at first and second distances, respectively, with a first region disposed between two of said second regions so that said first region and at least one of said second regions simultaneously image objects in the wearer's eye.

In a second embodiment of a contact lens according to the present invention, multiple sets of concentric optical regions are provided, each set including: a first region for imaging objects at one distance and a second region for imaging objects at another distance. The sets are arranged sequentially outwardly from the center of the lens with at least one set overlying the pupillary area of the wearer under average room lighting conditions when the lens is centered on the cornea. Thus, the sets of optical regions are repeated, although it is possible that an additional optical correction portion or a nonrefracting portion can be inserted between sets, the important concept being the repetition of sets simultaneously contributing to a wearer's vision. As mentioned above, there is a natural preference for viewing distant objects and according to one aspect of the present invention, embodiments of a contact lens can be provided in which sets are repeated over a wearer's viewing area, but with optical correction regions for viewing distant objects, for example, being deleted from one or more of those sets.

In another embodiment of a contact lens according to the present invention, the sets of optical correction regions provide so called trifocal correction, each set having optical regions for viewing near, distant and intermediate-positioned objects. Complete sets of the trifocal correction regions can be repeated throughout a viewing area with or without the inner position of additional optical correcting regions. In some embodiments one or more individual optical correction regions are omitted or added from one or more sets in the wearer's viewing area.

In the several embodiments set forth above, additional optical correction regions can be provided outside of a wearer's viewing area. Such outlying optical correction regions will come into the wearer's field of vision when the lens is displaced on the wearer's eye.

The various optical correction regions can be varied in size within a set or from one set to another. For example, the optical correction regions at the center of a wearer's viewing area and have larger areas than corresponding optical correction regions located radially outwardly therefrom. And when an important application, the optical correction regions for viewing distant objects can be reduced in area compared to optical correction regions for viewing near objects.

The optical regions can have circular or polygonal configurations, such as triangles or rhomboids, successively internested one in another, and the inner regions need not be "centered" with respect to their outer surrounding regions, but can be spaced very close to the outer adjacent region. The present invention also contemplates a plurality of optical regions in a viewing area, which are not internested or arranged in any repeating pattern. For example, the optical regions could be arranged throughout a lens area as closed areas, separate from one another. The optical regions could also comprise bars or stripes, either undulating or straight, extending across a wearer's field of vision. The optical regions could also comprise wedge portions of a circle, and the intersecting tips of the wedges need not be at the center of the circle. Of course, wedge shapes could be provided in rectangles, ovals or other shapes. Alternatively, the optical regions could comprise a random pattern, either contiguous with one another or spaced apart by intervening regions, such as plano regions, for example.

The following is a description of some specific embodiments of the invention, reference being made to the accompanying drawings in which:

FIG. 1 is an elevation view of a contact lens illustrating principles according to the present invention, having three optical correcting elements;

FIG. 2 is a cross-sectional view of the contact lens of FIG. 14 taken along the line 2-2;

FIG. 3 is an elevational view of a second embodiment of a contact lens according to the present invention;

FIG. 4 is a cross-sectional view taken along the line 4-4 of FIG. 3;

FIG. 5 is an elevational view of another contact lens illustrating principles according to the present invention having four sets of two-element optical correction regions;

FIG. 6 is an elevational view of a further embodiment of a contact lens illustrating principles of the present invention having three sets of trifocal vision correcting regions;

FIG. 7 is an elevational view of a lens having banded optical regions;

FIGS. 8-10 are elevational views of lenses having multiple sets of optical regions; and

FIG. 11 is an elevational view of eyeglasses having lenses according to the present invention.

The present invention can be embodied in a variety of lens products, including contact lenses, eyeglass lenses and intraocular implant lenses, as well as contact lens buttons, for example. As used herein, the term "contact lenses" includes both corneal and scleral contact lenses as well as lenses that cover the cornea and part of the sclera.

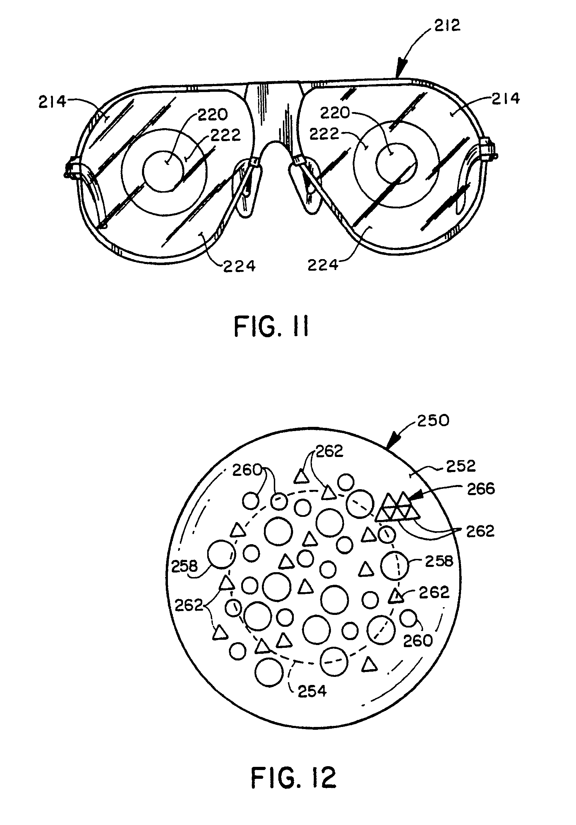

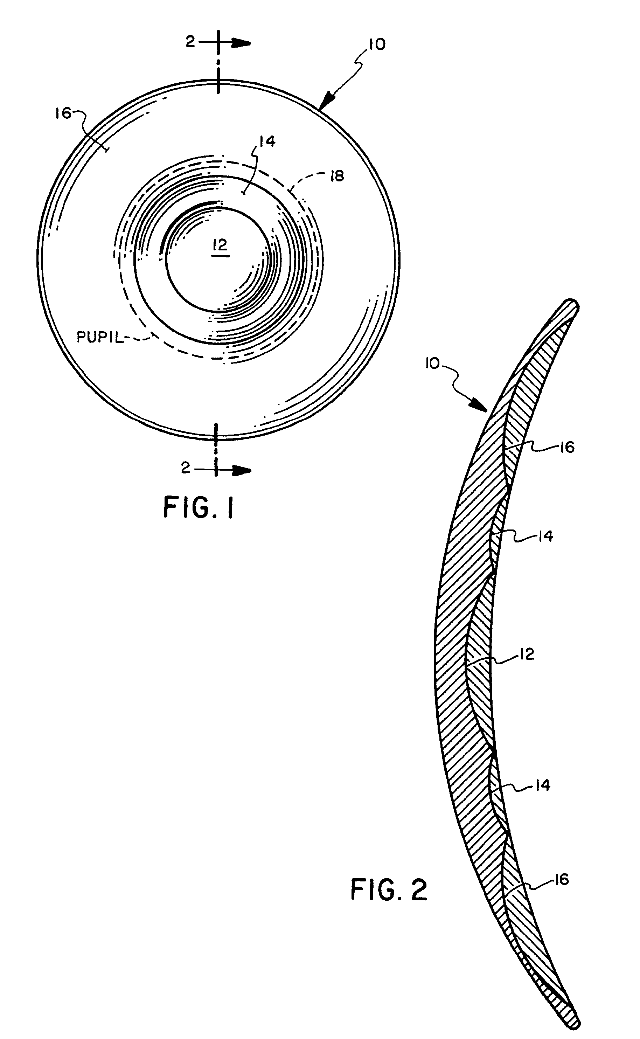

Referring now to FIGS. 1 and 2, a contact lens is generally indicated at 10. As will be seen herein, contact lens 10 has a plurality of optical correction portions for focusing objects at different distances from a wearer's eye. In each of the embodiments of contact lenses according to principles of the present invention, a wearer's brain processes images from at least three optical correcting regions, simultaneously, and thus, the term "simultaneous vision lenses" is appropriate for contact lenses according to the principles of the present invention.

As will also be seen herein, an important feature of the present invention is the repetition of one or more particular optical correcting portions. For example, in FIG. 1, contact lens 10 is provided with a central optical correcting portion for viewing near objects. The annular portion 14 surrounding center 12 is ground to focus objects at a distance from the wearer. The numeral 18 shown in dashed lines indicates the outer diameter of an average pupil size under average room lighting conditions. The remainder of contact lens 10, herein illustrated as outer region or annular portion 16 is ground for focusing on nearby objects.

Referring again to FIG. 1, the lens is shown centered on a wearer's pupil, under average room lighting conditions. As can be seen in FIG. 1, all three optical correction regions 12, 14, 16 (at least partly) overlie the wearer's pupil, thus, simultaneously contributing to the images processed by the wearer's visual faculties. The three optical regions can be proportioned in size to meet the needs of a particular wearer. As illustrated in FIG. 1, the optical region 14 for imaging distant objects has a smaller pupil-covering area than the central region 12 and the portion of outer region 16 overlying pupil 18.

According to one aspect of the present invention, the percentage of pupil-covering area for those optical regions imaging distant objects ranges between 30 and 50% and preferably is approximately 40% of the optical regions overlying the wearer's pupil for imaging near objects. If it is desired to provide a distance imaging region of greater area, the annular portion 14 can be expanded in size, preferably by reducing the size of central region 12 thereby assuring that at least a portion of the outer region 16 overlies the wearer's pupil with a lens centered, under average room lighting conditions. Alternatively, if desired, the near and far imaging regions can be interchanged, with central region 12 and outer region 16 imaging distant objects and region 14 imaging near objects. If such inversion is employed, the area of region 14 should be enlarged considerably beyond that illustrated in FIG. 1 so as to cover between 50 and 70% of the wearer's pupil under average room lighting condition, with the lens centered on the eye.

Thus, in FIG. 1, a multifocal vision correcting lens 10 is provided with sets of optic regions for imaging objects at different distances. The first set, comprised of portions 12, 16 image near objects, and the second optic region comprised of portion 14 images objects at a greater distance. The first set of optic regions is comprised of the portions 12, 14 the set imaging objects at both near and far distances. The second set includes the portion 16 which provides a partial repetition of the first or inner set. In particular, the portion 16 of the outer set repeats the near distance correction portion 12 of the inner set.

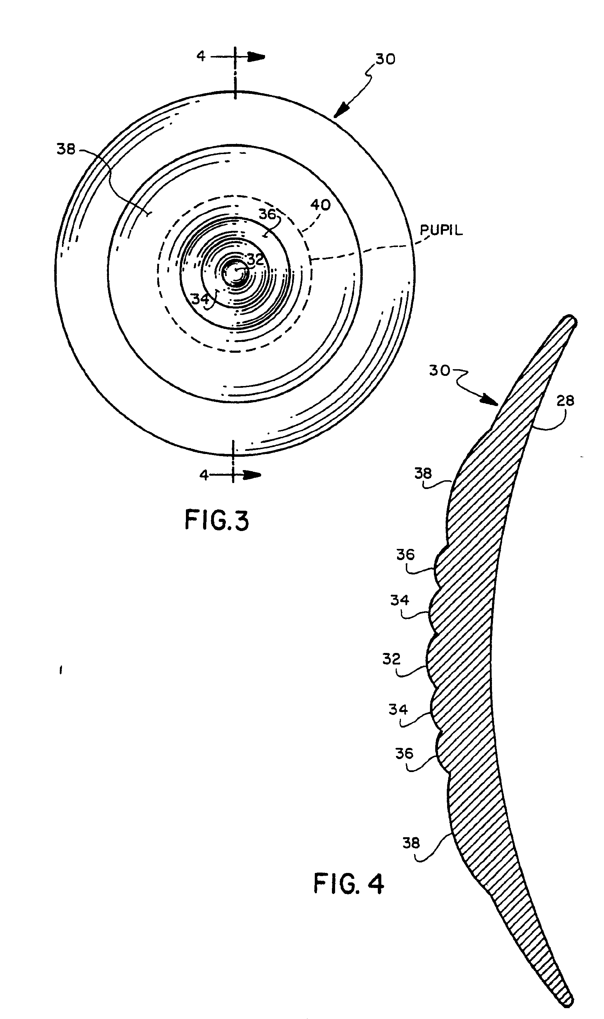

As can be seen in the preferred embodiment of FIG. 2, the optical prescriptions for the regions 12-16 is provided in the posterior surface 20 of lens 10, using conventional lens-forming techniques. The prescription portions could also be formed in the anterior surface of the lens, as shown in FIGS. 3 and 4. Although spherical powers are shown, aspherical constructions could also be used.

As an important feature, lenses constructed according to the present invention can be used by contact lens practitioners without altering their present fitting techniques. For example, if a practitioner prefers a lower riding lens, the radially inner portion of outer region 16 overlying the wearer's pupil will be lost at the bottom of the wearer's pupil, but that same portion will have increased pupil-covering area adjacent the top of the pupil. Even if the lens 10 rides very low in a wearer's eye, and the lower part of region 14 drops outside of pupil 18, the area lost will be minimal, due to the configuration and relative proportions of the wearer's pupil and the optical regions involved. These advantages are attained by repeating either far or near optical regions overlying the wearer's pupil. The simultaneous vision principles employed in the present invention provide a constant, stable perception by a wearer, despite shifting of the lens 10 about the wearer's eye (except for certain types of visual disorders where a wearer's visual sensitivity is not angularly uniform).

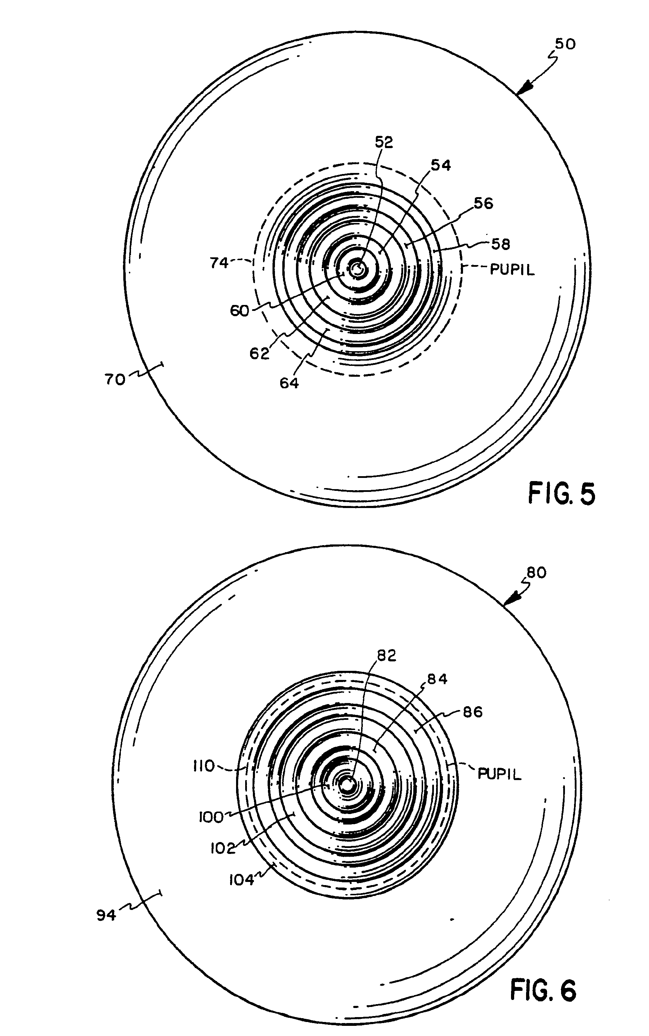

As can be seen from the above, the multifocal contact lens 10 is provided with a combination of distance and near optical regions which are arranged to alternate sequentially outwardly from the center of lens 10 to provide at least three alternating regions, with at least one of the far and near regions overlying the pupillary area of the wearer under average room lighting conditions when the lens is centered on the wearer's cornea. As will be seen below, the present invention also contemplates more than three optical regions, and can accommodate additional regions for imaging objects at third, fourth and fifth different distances, for example. In FIG. 6, for example, as will be seen, a contact lens constructed according to principles of the present invention, employs three different optical correction regions for imaging objects at near, far and intermediate distances.

As mentioned above, contact lens 10 has three optical regions provided by an alternating sequence of far and near optical regions. The present invention also contemplates the interposition of other optical regions either of a nonrefracting type or of a type imaging objects at different distances or ranges of distances not already imaged by the other optical regions, between adjacent alternating regions. With simultaneous vision correction, contact lenses constructed according to the present invention continue to function satisfactorily despite such inner position of optical regions not falling within the alternating sequence.

Referring now to Figs. 3 and 4, a contact lens constructed according to principles of the present invention is generally indicated at 30. As with the aforedescribed lens 10, lens 30 is a contact lens having multiple optical regions therein for simultaneous vision correction. Lens 30 has a central optical region 32 and concentric surrounding regions 34, 36, and 38 disposed thereabout. Optical regions 32-36 lie entirely within the wearer's pupil 40 which is shown under average room lighting conditions with the lens 30 centered about the wearer's pupil. The radially inner portion of outer region 38 also lies within pupil 40.

With additional reference to FIG. 4, the central optical region 32 and optical region 36 image distant objects whereas optical regions 34 and 38 image near objects. Thus, as with the lens 10, lens 30 is comprised of a sequence of first and second optical regions, that is, optical regions for imaging near and far objects (i.e. objects at first and second distances. Contact lens 30 has the various regions thereof arranged to alternate sequentially outwardly from the center of the lens with every other optical region imaging objects at the same focal distance, and with adjacent optical regions imaging objects at different distances.

As mentioned above, the optical regions of lens 30 which image near and far objects, respectively, alternate sequentially outwardly from the center of the lens. As specifically contemplated by the present invention, lenses constructed similar to the lens 30 but having additional nonrefracting or refracting portions inserted between any of the several portions of lens 30 are still said to have optical regions which alternate sequentially outwardly from the center of the lens. That is to say, the inner position of additional optical regions does not detract from the alternating sequence referred to herein. As with lens 10, lens 30 is very tolerant with respect to shifting of the lens about a wearer's eye. For example, should the lens 30 shift in a downward direction, a wearer's perception of objects imaged by the lens will not be substantially altered, even if the lens shift is great enough to have portions of the far optical region 36 shift outside of a wearer's pupil-covering area, because of the configuration and relative proportion of that optical region and the wearer's pupil.

Referring now to FIG. 4, it can be seen that the optical regions 32-38 are provided on the anterior surface 44 of lens 30. As with other embodiments of the present invention, optical corrections could be integrated with the posterior surface 46 of the lens, using manufacturing techniques such as molding, casting, spin casting, or generation. Several other variations are explicitly contemplated with the present invention. For example, the two mentioned optical regions, for imaging near and far objects can be interposed with the central region 32 imaging near objects and regions 34 and 38 imaging distant objects. Also, the relative proportions or areas of the various optical regions 32-38 can be adjusted as desired to meet the needs of a particular wearer. For example, with the central-far arrangement illustrated in FIG. 3, the area of one or both of the optical regions 32, 36 can be reduced in area to compensate for the natural preference to concentrate on far objects.

The same compensation can be provided for an inverted arrangement where optical regions 32, 36 image near objects and regions 34, 38 image far objects. For this inverted arrangement, one or both of the optical regions 34, 38 can be reduced in size. For example, the outer region 38 could be reduced in size such that the inner portion thereof overlying the wearer's pupil 40 is reduced or even eliminated. If, for example, outer portion 38 has an inner edge at or near the outer periphery 40 of the wearer's pupil, if the lens should shift downwardly from a centered position, relatively minor portions of outer optical region 38 will be "picked up" by the wearer's visual system as portions of outer optical region 38 begin to overlie the top of the wearer's pupil. Due to the concentric orientation of the optical regions, the same analysis applies to shifting of the lens in directions other than a downward direction.

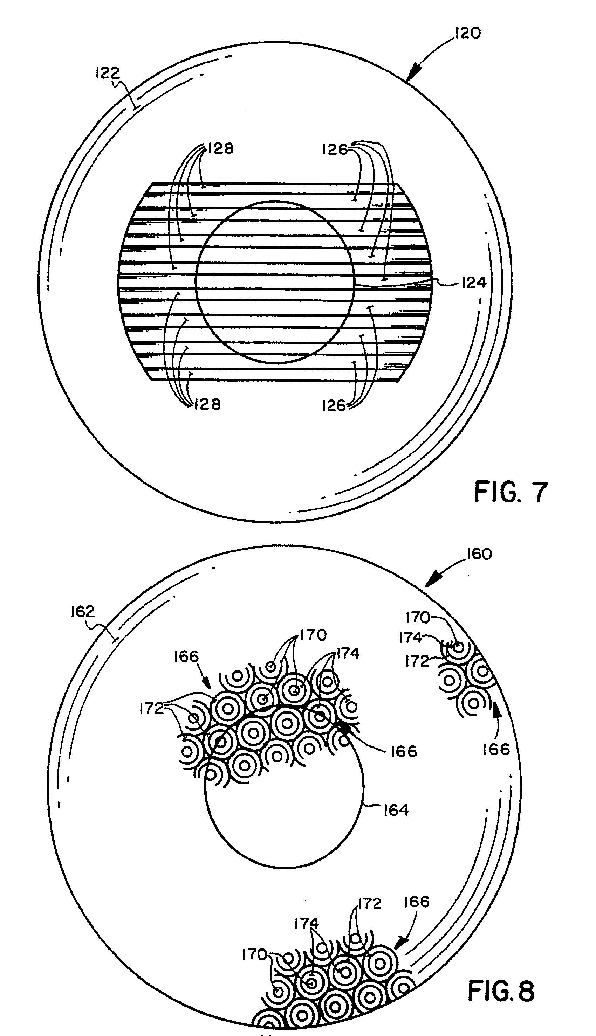

Other variations are also possible. Concentric, circular or annular optical regions have been described above. The optical regions could also comprise bands or stripes. One example of straight-line or parallel bands is given in FIG. 7. Undulating bands could also be used. The principle of alternating multiple optical regions, with at least three bands simultaneously contributing to the wearer's vision is preferred for these alternative embodiments. As a further variation, multiple sets of optical regions could also be employed in the manner illustrated in FIGS. 8-10, for example. Internested optical regions of circular (annular) or polygonal configuration could be employed. Within each set multiple optical regions simultaneously contribute to a wearer's vision. Since multiple sets are employed, adjacent sets can include optical regions of different focal distances. For example, a trifocal correction can be provided with sets of far and near optical regions, sets of far and intermediate optical regions and near and intermediate optical regions. As a further alternative, optical correcting powers can be provided on both posterior and anterior surfaces of the lens. The lens illustrated in Figs. 3 and 4 is a contact lens of the various types available today (corneal, scleral, part-scleral, for example), but the same principles could also be applied to intraocular implant lenses and eyeglass lenses, as well as contact lens buttons and other types of lens products.

Referring now to FIG. 5, another preferred embodiment of a contact lens constructed according to principles of the present invention is generally indicated at 50. Contact lens 50 has a central optical region 52 for imaging distant objects. A plurality of optical regions surrounds the center, with every other optical region imaging distant objects. For example, optical regions 54, 56 and 58 also image distant objects in addition to the aforementioned central optical region 52. The intervening optical regions 60, 62 and 64 image near objects, as does the outermost optical region 70. Optical regions 52-64 lie within the wearer's pupil 74 under average room lighting conditions, when the lens 50 is centered about the wearer's pupil. The radially inner portion of outer optical region 70 also lies within pupil 74 under these conditions, and simultaneously contributes to the wearer's vision along with the radially interior optical regions 52-64. Thus, lens 50 comprises a multifocal contact lens having a plurality of sets of concentric optical regions, each set including a first region for imaging distant objects and a second region for imaging near objects. The sets arranged sequentially outwardly from the center of the lens. In the preferred embodiment, all four sets overlie the pupillary area of the wearer under average room lighting conditions when the lens is centered on the cornea, although the present invention also contemplates dimensioning of the various sets so that at least one set of optical correction regions overlies the wearer's pupil when the lens is centered on the wearer's eye, under average room lighting conditions.

The present invention contemplates several variations of the preferred embodiment illustrated in FIG. 5. For example, the central optical region 52 can be made to image near objects with near and far optical regions being inverted from the relative positioning illustrated in FIG. 5. It is preferred with such inversion, that the areas of the optical regions imaging far objects be made proportionally less than the areas of the optical regions imaging near objects so that, the total area of near-imaging optical regions is greater than the area of distance-imaging optical regions which overlie a wearer's pupil. The proportioning of near-imaging to distance-imaging optical regions need not be uniform throughout the various sets of optical regions but can be accommodated in one or more of the sets overlying the pupillary area, for example. Since the optical regions at various positions of lens 50 can be altered as contemplated by the present invention, the relative sizes of the various regions of lens 50 need not follow a repeating pattern, such as that illustrated in FIG. 5.

Further, the present invention also contemplates that the sequential arrangement of different optical regions of the lens can be preserved despite the interposition of a different optical region in the sequence. For example, a nonrefracting region or a region imaging at a different distance or range of distances can be interposed between any of the adjacent optical regions illustrated in FIG. 5 and the sequence of different optical regions (herein near-imaging and distant-imaging optical regions) will still be preserved to provide the various advantages described herein. One advantage of having a greater number of sets of optical regions overlying the wearer's pupil is that shifting of the lens with respect to the wearer's pupil results in a smooth transition of the information provided to a wearer's visual system, the shifting being virtually imperceptible to the wearer.

If desired, the relatively small, finely-divided optical regions can extend outside of the wearer's pupil. For example, additional sets of optical regions can be provided surrounding optical region 58 and could for example, be comprised of an addition of sets of optical regions extending to the periphery of lens 50, although the outer most sets of optical regions would, in certain circumstances, play no active role in contributing to the wearer's vision, since they will not overlie the wearer's pupil, even when shifted from a centered position. However, one or more additional sets can be disposed about optical region 58 so as to extend slightly beyond the wearer's pupil 74, such additional sets coming within the wearer's field of vision with shifting of lens 50.

In the preceding embodiments, two optical regions have been provided in each lens, regions for imaging near and far objects. Referring now to FIG. 6, a contact lens generally indicated at 80 has sets of three optical regions, for imaging objects at near, far and intermediate distances. For example, the central optical region 82 and every third optical region located outwardly therefrom, images near objects, with the near-imaging optical regions including the aforementioned region 82 and in addition regions 84 and 86. Optical regions 90 and 92 image far objects and are located radially anteriorly of near-imaging regions 82 and 86, respectively. The outermost region 94 also images far objects. The remaining optical regions 100, 102 and 104 image objects at intermediate distances. Thus, the first or innermost set of concentric optical regions comprises regions 82, 100 and 90. The next set comprises regions 84, 102, and 92. The multi-focal contact lens 80 is provided with a plurality of sets of concentric optical regions, each set including first, second and third regions for imaging near, intermediate and far objects, respectively, with at least one set overlying the wearer's pupil 110 under average room lighting conditions, when lens 80 is centered about the wearer's pupil.

If desired, the optical regions within a particular set can be transposed. For example, the far-imaging optical region 92 and the near-imaging optical region 86 can be exchanged one for the other, with the simultaneous vision perceived by a wearer remaining unchanged, the areas of each optical region overlying the wearer's pupil remaining constant. Further, the sequence of sets of optical regions will remain, even though a different optical region is interposed within or between any of the sets. For example, a nonrefracting region or a region for imaging objects at a fourth, different distance or at a range of distances, can be interposed between any of the optical regions 82-104 illustrated in FIG. 6. Such might be desirable for treating pathologic eyes. For example, such constructions may be used for wearers having one or more scotomas in their retina which lie within the annular or circular portion of the lens corresponding to a particular optical region. Thus, a contact lens constructed according to principles of the present invention can provide a plurality of treatments which are tailored to relatively small portions of a wearer's eye, to provide an overall improvement of the wearer's vision.

Also, if desired, additional sets of optical resions can be provided to extend beyond the wearer's pupil, with the additional sets being brought into a wearer's vision area, as the lens is shifted from a centered position. If a large number of optical regions are provided in the lens, a total area for each optical region will be preserved, even if the shift results in several particularly located regions passing into and out of the wearer's vision.

The above embodiments are examples of sets of two and three optical regions although four or more optical regions could also be employed for imaging objects at four or more different distances or ranges of distances. With computer-driven lens-cutting machines available today, a very large number of optical regions can be cut in a contact lens, or in a molding or casting die, thus providing a relatively large number of sets of optical regions which simultaneously contribute to a wearer's field of vision as the lens is being worn, and vision shifts due to blinking, sagging of the lens, moving of the head and other such circumstances can be completely avoided or at least drastically reduced with lenses constructed according to principles of the present invention. Further, it will now become apparent to those skilled in the art that economies of manufacture are possible even for wearers having unusually large or small pupil areas. With the present invention, these wearers can now enjoy multifocal vision correction with inexpensive rapidly producible lenses. Further, eye care practitioners can tailor the prescription portions of a wearer's lens to accommodate damaged retinas which do not afford angularly uniform visual processing, and those skilled in the art will readily appreciate that the lenses constructed according to principles of the present invention can be provided with prism ballast or truncated peripheries for angular fixing of the contact lens about the wearer's eye so as to provide a further degree of control of prescriptive correction for wearers having angularly non-uniform vision.

Various aspects of the present invention have been described above with respect to various embodiments having concentric rings of optical correction portions, for imaging objects at different distances or ranges of distances. Referring now to FIG. 7, the present invention will be described with reference to a contact lens generally indicated at 120. The lens 120 includes a body 122 shown centered with respect to a wearer's pupil 124. A series of optical correction portions of strip-like contiguous bands are formed in the anterior surface of the lens and, as shown in FIG. 7, preferably overlie the pupil 124 and extend therebeyond so that with shifting of lens 120 about the wearer's eye, the pupil remains covered by the optical correction portions. The optical regions have the configuration of strip-like bands. In the preferred embodiment of FIG. 7, the bands are generally parallel, and are generally contiguous. They could also be slightly spaced, or could be wavy, undulating or sinuous in configuration.

Lens 120 illustrated in FIG. 7 provides bifocal correction, being comprised of an alternating series of vision correction portions 126 for imaging near objects and optical correction portions 128 for imaging far objects. As illustrated in FIG. 7, the lens 120, in its preferred embodiment, has optical correction portions 126, 128 of unequal widths and therefore unequal area overlying the wearer's pupil. More particularly, the nearer portions 126 are wider than the far portions 128 and thus, of the area of the lens through which a wearer views his surroundings, a larger proportion is ground or otherwise formed for viewing objects at closer distances.

The lens 120 offers many of the advantages described above with respect to embodiments having concentric optical correcting ring portions. For example, a wearer's corrected vision will remain constant despite rotation of lens 120 about the wearer's pupil. That is, even if lens 120 is rotated in either a clockwise or a counterclockwise direction, the total area of near-distance correction and of far-distance correction remains constant.

Further, as mentioned, it is preferred that the optical correction portions be repeated a significant number of times or otherwise configured so as to extend beyond a wearer's pupil. Thus, the lens 120 is insensitive to shifting about the wearer's eye. That is, the images focused in the wearer's eye by lens 120 remain constant even if the lens should "drop" due for example to the particular fitting practice employed, or should be picked up by a wearer's eyelid during a blinking episode. For example, assuming the lens drops to a lower riding position, the near-distance region at the bottom of the wearer's pupil will shift outside of the wearer's range of vision, but the near-distance region at the top of the wearer's pupil will more fully appear in the wearer's range of vision, thus providing a constant area input of near imaging correction and distance imaging correction to the wearer's eye. It will now become apparent that even with both rotation and shifting the respective optical correction portions 126, 128 overlying the wearer's pupil will remain substantially constant and thus the presentation to the wearer by the contact lens will remain unchanged.

Several variations are possible with the lens 120. For example, only two optical correction portions 126, 128 have been shown in the illustrated embodiment. It is possible however to provide three or more optical correction portions arranged preferably to form an alternating series of sets of optical correction portions, the sets being repeated at least once in that portion of the lens overlying the wearer's pupil under average room lighting conditions. If it is desired to reduce the number of repetitions as much as possible, the lens can be configured so that a full set of optical correction portions is only partially repeated in the overlap thereof over the wearer's pupil. For example, assuming a trifocal correction of near intermediate and distance optical correction portions, a full set of optical correction regions (near intermediate and distance portions) are dimensioned to overlie the wearer's pupil under average room lighting conditions. However, in addition, the near portions of the set will also be arranged to overlie the wearer's pupil, the set being thereby partially repeated for that portion of the lens overlying the wearer's pupil.

Referring now to FIG. 8, a lens 160 has a body 162 overlying the wearer's pupil 164. A series of optical correction sets 166 overlie the wearer's pupil 164 and extend therebeyond. In the illustrated embodiment, the optical correction sets 166 include a central region 170 for imaging distant objects, an outer region 172 for imaging near objects, and between the two a region 174 for imaging intermediately positioned objects. It will be readily appreciated by those skilled in the art that the regions of each optical correction set can vary in relative size, and that the size of the sets themselves can be adjusted as desired. Further, the lens can be provided with sets of different sizes and certain sets can favor a particular optical region, devoting more area to that region, perhaps to the exclusion of another region. One particular feature contemplated by the present invention, is that each "set" include only one optical correction region, the regions thus lying outside of one another, rather than being internested.

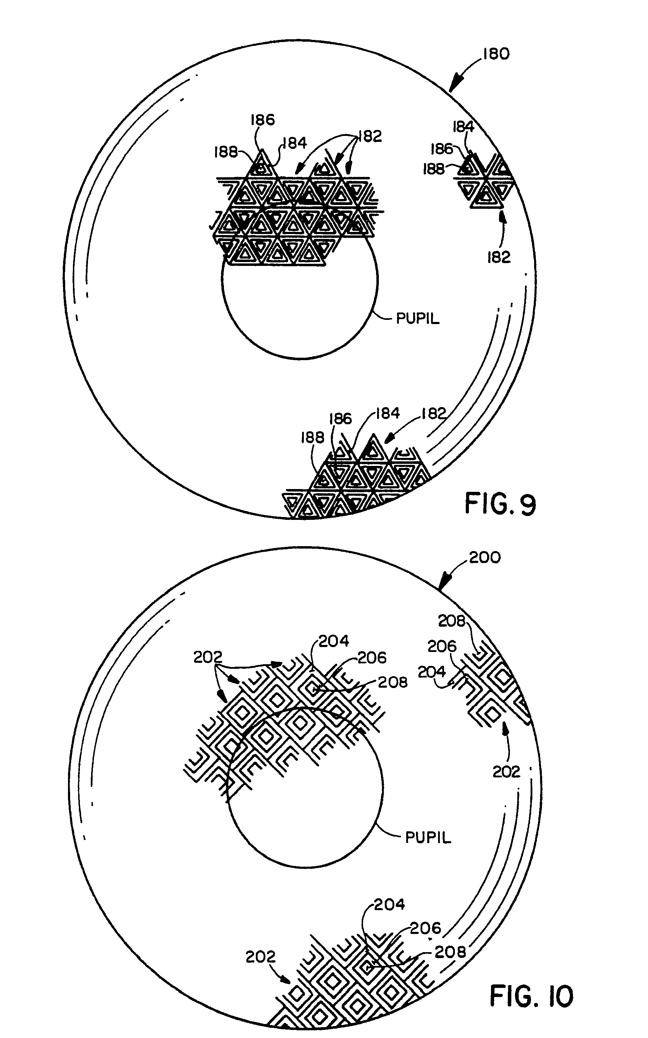

As shown in the above examples, optical regions embodying principles according to the present invention can have either an annular or circular configuration or a linear strip-like configuration which can be either straight or undulating in nature. The present invention further contemplates optical regions of polygonal configuration. Referring to FIG. 9, for example, lens 180 has a plurality of optical correction sets 182 formed therein. The lens 180 could be employed as an intraocular implant lens, or as a contact lens, for example. Each set 182 is comprised of a plurality of triangular optical regions. In the Preferred Embodiment of FIG. 9, trifocal correction is provided with three optical regions per set. The set of the Preferred Embodiment comprises an outermost triangular optical correction region 184 with triangular regions 186 and 188 successively internested therein. In the Preferred Embodiment, optical region 184 images distant objects, the central triangular optical region 188 images near objects and the intervening triangular optical region 186 images intermediately positioned objects.

In the Preferred Embodiment, the optical correction sets 182 are contiguous one with another although they could be slightly spaced apart if desired. All of the optical correction sets of lens 180 could have the trifocal correction provided by three successively internested optical correction regions. Alternatively, one or two of the regions could be omitted from particular sets as one means of providing a desired total area coverage for a particular optical region. Also, the sizes of the optical regions of the sets can be adjusted either uniformly throughout the entire lens or locally to meet the total percentage area requirements for each optical region.

Referring now to FIG. 10, lens 200 is provided with a plurality of optical correction sets 202, the optical correction sets having a second type of polygonal configuration. In the Preferred Embodiment illustrated in FIG. 10, the optical correction sets 202 are comprised of three optical regions, thus providing trifocal vision correction. The three optical regions are identified by the reference numerals 204, 206 and 208 extending from the outer to the inner or central portion of the optical correction set, respectively. The outer optical correction region 204 has a "diamond" or rhomboidal configuration with similarly shaped rhomboidal portions 206, 208 successively internested therein. In the Preferred Embodiment, the central rhomboidal optic region images near objects and the outer optic region 204 images distant objects, the intermediate optic region 206 imaging intermediately positioned objects. Preferably, the optic correction sets 202 are positioned contiguous one another but could also be slightly spaced apart if desired.

Other polygonal configurations could be employed according to principles of the present invention. For example, the optic regions of a multifocal vision correcting lens could comprise internested regions of pentagonal, hexagonal or octagonal configuration, and polygons of virtually any number of sides could be employed, although for small-size optic regions having polygonal configurations with a relatively large number of sides, the visual effect will closely resemble that of internested circular regions which are easier to manufacture.

With reference to FIG. 8, the multiple optical correction sets comprise optic regions of circular configuration successively internested one in another. As shown in FIG. 1, the lens could be covered with a single optical set. Similarly, a lens could be provided with a single optical set 182 of triangular configuration or with a single optical set 202 of rhomboidal configuration. However, for each alternative construction it is generally preferred that the optic set be sized considerably larger that the wearer's pupil under average room lighting conditions to eliminate edge effects. Further, it may be preferable in many applications to at least partially repeat the first, centrally positioned optical set to further eliminate the risk of uncorrected vision should the lens shift an unusually large amount from a centered position. It is possible that lenses having a single optical correction set of triangular or rhomboidal configuration could be especially important for special tasks where a wearer is relatively immobile, the lens automatically providing a focusing or concentration to a particular portion of the wearer's field of vision.

Many of the above examples of multifocal vision correcting lenses according to principles of the present invention have been described as contact lenses, typically having an outer periphery configured to facilitate fitting of the lens about a wearer's eye. Those skilled in the art will also readily appreciate that principles according to the present invention can be readily incorporated in intraocular implant lenses as well as lenses adapted for mounting in an eyeglass frame, such as the frame 210 of eyeglasses 212. The lenses 214 have the general pattern illustrated in FIG. 1 wherein the central optic region 220 images distant objects, the outer optic region 224 images near objects and the intermediate optic region 222 images objects at intermediate distances. If desired, any of the lens patterns of the preceding FIGS. 1-10 could be employed in the eyeglass lenses 214.

The present invention has been described above with respect to optical correction regions which are internested, one in the other, and which are embodied in either straight or undulating bars or stripes. It was also mentioned that the optical regions need not be internested, but could be separated apart from one another, occupying the same lens area. Referring now to FIG. 12, a contact lens 250 has a lens body 252 dimensioned to overlie a wearer's pupil 254. The lens 250 provides trifocal correction, and has three different optical correction regions 258, 260 and 262, for imaging near, intermediate and far objects, respectively, the optical regions 258-262 are arranged in a random fashion about lens 250. The optical regions 258-262 are of dissimilar size and employ different shapes. In the embodiment illustrated in FIG. 12, a particular optical region, that is, the region for focusing objects at a particular distance all have a similar size and shape, although the present invention also contemplates that optical regions could have varying sizes and shapes throughout a lens area. Further, the optical regions of a particular type could be grouped in an area of the lens, for example the center but could still be arranged in a random pattern within that area.

In the embodiment illustrated in FIG. 12, most of the optical regions are separated one from another but they could also be contiguous as with the grouping of optical regions 262 generally indicated at 266.

It will become immediately apparent to those skilled in the art, that the present invention can also be applied to lenses which are implanted in a wearer's eye, so called intraocular lenses, in addition to contact lenses of various types. Further, principles of the present invention can be used with soft contact lenses of the type formed by machining a relatively hard plastic button and then subjecting the machined button to various softening processes. The present invention can also be applied to eyeglass lenses of a type which are made by molding or casting, such as spin casting, or which are generated. In each of these various embodiments, a multifocal vision correcting lens or lens product, such as a contact lens button, is provided for simultaneously imaging objects in the wearer's eye under average room lighting conditions.

The drawings and the foregoing descriptions are not intended to represent the only forms of the invention in regard to the details of its construction and manner of operation. Changes in form and in the proportion of parts, as well as the substitution of equivalents, are contemplated as circumstances may suggest or render expedient; and although specific terms have been employed, they are intended in a generic and descriptive sense only and not for the purposes of limitation, the scope of the invention being delineated by the following claims.

## Claims

1.  A multifocal vision correcting lens with first and second optic regions for imaging objects at first and second distances, respectively, with a first region disposed between two of said second regions so that said first region and at least one of said second regions simultaneously image objects in the wearer's eye.

2.  The lens according to Claim 1 wherein said regions comprise a central portion surrounded by a plurality of outer portions, successively internested one in another.

3.  The lens according to Claim 1 wherein said regions comprise generally contiguous bands extending across the wearer's field of vision.

4.  The lens according to Claim 3 wherein said bands extend generally parallel to one another.

5.  The lens according to Claim 1 wherein said lens comprises a plurality of sets of said regions, each set comprising a central portion surrounded by a plurality of outer portions, successively internested one in another.

6.  The lens according to Claim 2 wherein said lens is substantially larger than the wearer's pupil and has an outer peripheral edge adapted for mounting in an eyeglass frame.

7.  The lens according to Claim 2 wherein said lens comprises a contact lens which is substantially larger than the wearer's pupil and which has an outer portion of the outermost region lying outside the wearer's pupil which is adapted for fitting the lens in the wearer's eye.

8.  The lens according to Claim 1 further comprising a third optic region for imaging objects at a third distance disposed adjacent ones of said first and said second regions so as to contribute to the simultaneous image formed in the wearer's eye.

9.  The lens according to Claim 2 wherein said central portion images distant objects and at least one of the outer portions images nearby objects.

10. The lens according to Claim 2 wherein said central portion images nearby objects.

FIG. 11

FIG. 12

FIG. 1

FIG. 2

FIG.3

FIG. 4

FIG. 5

FIG. 6

EP 0 445 994 A2

FIG. 7

FIG. 8

14

FIG. 9

FIG. 10